# EUROPÄISCHE PATENTSCHRIFT

(11) **EP 0 950 974 B1**
(45) Veröffentlichungstag und Bekanntmachung des Hinweises auf die Patenterteilung: **24.10.2001**
(21) Anmeldenummer: 98102950.7
(22) Anmeldetag: 20.02.1998
(51) Int. Cl.: G06K 7/00

(54) **Vertikal montierbarer, kurzbauender Chipkartenleser**
Vertically installable, compact chipcard reader
Lecteur de carte à puce compact et installable verticalement

(43) Veröffentlichungstag der Anmeldung: 20.10.1999
(73) Patentinhaber: STOCKO Contact GmbH & Co. KG, 42327 Wuppertal (DE)
(72) Erfinder: Ungermann, Heinz, 63389 Linsengericht (DE); Bäcker, Arnd, 53940 Hellenthal (DE); Klatt, Dieter, 42489 Wülfrath (DE)
(74) Vertreter: Stenger, Watzke & Ring Patentanwälte

(56) Entgegenhaltungen:
- WO-A-95/02499
- WO-A-97/38443
- DE-U- 29 615 553
- US-A- 5 475 919

## Beschreibung

Die Erfindung betrifft eine Kontaktiereinheit nach PCMCIA-Norm, mit einer kartenförmigen Leiterplatte mit elektronischen Baugruppen, die zusätzlich zu der an einer der schmalen Kartenseiten angeordneten Steckverbinderleiste der Leiterplatte mit einem Kontaktfeld an einer Oberfläche der Leiterplatte für die Kontaktierung einer Chipkarte ausgerüstet ist, die parallel zur Leiterplatte durch einen Einschubschlitz in einen schlitzartigen Einschubkanal einschiebbar ist, welcher zwischen einer Basisplatte und der Leiterplatte ausgebildet ist und eine Einschubführung an der der Steckverbinderleiste gegenüberliegenden schmalen Seite aufweist, wobei die Leiterplatte von einem Kunststoffrahmen gehalten ist, der an einer Abdeckplatte angeordnet ist. Die Erfindung betrifft ferner ein Verfahren zur Herstellung einer solchen Kontaktiereinheit.

Eine Kontaktiereinheit der beschriebenen Art aus dem deutschen Gebrauchsmuster 296 07 253 bekannt. Dabei ist ein kartenförmiges Trägerelement nach PCMCIA-Norm in einem schalenförmigen Gehäuse angeordnet und somit in den entsprechenden Aufnahmeschlitz eines Rechners, insbesondere eines Notebooks, einschiebbar, wobei die elektrische Kontaktierung über die frontseitig angeordnete Steckverbinderleiste normgemäß vorgenommen wird. Gleichzeitig ist das Gehäuse der bekannten Kontaktiereinheit vorgesehen, eine parallel zur Leiterplatte in einen schlitzartigen Einschubkanal des Gehäuses der Kontaktiereinheit einschiebbare Chipkarte aufzunehmen und mittels eines auf der Oberfläche der Leiterplatte angeordneten Kontaktfeldes zu lesen. Die Kombination einer PCMCIA-Karten- und Chipkarten-Kontaktiereinheit, die in einen entsprechenden Modulaufnahmeschlitz eines Computers eingeschoben und gelesen werden kann, ist bereits aus der EP 0 552 078 A1 für verschiedenste Anwendungen, beispielsweise electronic banking, Pay-TV, Sicherung einer Zugangsberechtigung zu Computern oder Datennetzen, Speichererweiterung usw. bekannt. Nachteilig ist, daß die bekannten Chipkartenleser dieser Art eine über den Einschubbereich des Modulaufnahmeschlitzes des Computer hinaus sich erstreckende Gehäuseerweiterung in Form einer vergrößerten Einschubführung für die Chipkarte, die gleichzeitig eine Handhabungsleiste für den Benutzer darstellt, aufweisen. Hierdurch werden die Lesegeräte erheblich länger als die normierten PCMCIA-Karten und ragen in der Betriebsstellung mit dem Erweiterungsbereich aus dem Aufnahmeschlitz des Notebooks beispielsweise heraus, so daß die Gefahr besteht, daß in der mobilen Handhabung die Kontaktiereinheit im Schlitz verklemmt wird oder gar verbogen beziehungsweise abgebrochen wird. Der Erweiterungsbereich wurde bislang für notwendig befunden, um eine sichere Führung der Chipkarte in den schlitzartigen Einschubkanal hinein und heraus ohne die Gefahr eines Verkantens zu gewährleisten, letztlich also um die Einführung, Arretierung und Entnahme einer Chipkarte sicher zu gestalten.

Mit der ständig zunehmenden Hinwendung zur Anwendung von Laptops, Notebooks und dergleichen transportablen Computern besteht technisch ein Bedürfnis, grundsätzlich sicherzustellen, daß ein in Betriebsbereitschaftsposition befindlicher Chipkartenleser vollständig in den Aufnahmeschlitz des Computers einschiebbar ist, ohne daß herausstehende Teile die Handhabung stören. Dies ist insbesondere dort von Bedeutung, wo dem Schutz von Daten auf einem tragbaren Computer höchste Sicherheit eingeräumt werden soll, indem der Zugang zum System nicht nur erst geöffnet ist, wenn das richtige Passwort verwendet wird, sondern zusätzlich eine persönliche Chipkarte, beispielsweise eine Smartcard der Größe einer handelsüblichen Telefonkarte in das Lesegerät eingeschoben ist, wobei das Lesegerät mit der die Zugangsberechtigung gebenden Chipkarte in den PCMCIA-Schlitz des Computers gesteckt ist. Es würde außerordentlich störend für die Handhabung des so betriebsbereit geschalteten Computers sein, wenn herausstehende Teile des Chipkartenlesers vorhanden wären. Die vollständige Aufnahme des Lesegeräts im PCMCIA-Schlitz des Computers ist daher eine wesentliche Marktforderung. Mit den bisherigen Kontaktiereinheiten ist dies nicht erreichbar.

Der Erfindung liegt die **Aufgabe** zugrunde, einen im Aufnahmeschlitz des Computers vollversenkbaren Chipkartenleser zu schaffen, der in den PCMCIA-Schlitz vollständig einschiebbar ist, ohne daß Teile herausragen, wobei trotz der Verkürzung eine sichere Einschubführung für die Chipkarte gegeben sein soll und auch die mechanische Stabilität bei einfacherer Herstellbarkeit gewährleistet bleibt.

Die Aufgabe ist durch eine Kontaktiereinheit der eingangs genannten Art mit folgenden Merkmalen des Anspruchs 1 erfindungsgemäß **gelöst** :
1.1 Die Basisplatte und die Abdeckplatte sind separate Blechteile mit nach innen gebogenen Krampen an den Längsseiten und/oder Schmalseiten;
1.2 die Basisplatte ist an der Steckverbinderleiste zu deren Erfassung randseitig mit je einem Kunststoffhalter und an der Chipkarten-Einschubseite mit einem über die gesamte Querseite sich erstreckenden, leistenförmigen Kunststoffprofilteil versehen, das die Einschubführung bildet und eine durchgehende Schlitzöffnung für die Chipkarte zu dem Einschubkanal aufweist, wobei an dem Kunststoffprofilteil eine sich nach innen erstreckende plattformartige Erweiterung oberhalb der Schlitzöffnung zur Halterung der Leiterplatte angeordnet ist;
1.3 an der Abdeckplatte sind zur Halterung des Kunststoffrahmens eine Vielzahl von Krampen vorgesehen, während an der Basisplatte das die Einschubführung bildende Kunststoffprofilteil mit Krampen an der Querseite und mit je einer Klammer oder einem Federelement an jeder Längsseite gehalten ist, die den Einschubschlitz seitlich begrenzen und damit Seitenführungen für die einzuschiebende Chipkarte bilden;
1.4 die Kunststoffhalter und das Kunststoffprofilteil sind mit den zugeordneten Krampen der Basisplatte zu einer Verbundeinheit verspritzt;
1.5 die Abdeckplatte ist innenseitig mit dem Kunststoffrahmen versehen, der mit den zugeordneten Krampen der Abdeckplatte zu einer Verbundeinheit verspritzt ist;
1.6 die Abdeckplatte und die Basisplatte sind miteinander über die Kunststoffelemente durch eine Kunststoffverbindung, wie Kleben, Ultraschallschweißen oder Heizverpressen verbunden.

Durch die erfindungsgemäßen Merkmale ist es möglich, eine außerordentlich kurze Kontaktiereinheit bereitzustellen, deren Länge und Breite der PCMCIA-Norm Typ II im wesentlichen entspricht und die in vollem Umfange in den PCMCIA-Schlitz eines Computers, insbesondere Notebooks, einsetzbar ist, ohne daß herausstehende Teile frei bleiben. Durch die volle Versenkbarkeit wird darüber hinaus die Kontaktsicherheit für das Lesegerät verbessert und ist jegliche Beschädigungsgefahr auch während des Transports vermieden, wobei in bekannter Weise auch eine Schutzklappe vorgesehen sein kann, die den Einschubschlitz bei eingeschobenem Lesegerät verschließt.

Ein wesentlicher Kerngedanke der Erfindung besteht darin, an der Basisplatte und der Abdeckplatte hochstehende und nach innen gebogene Krampen vorzusehen, die mit den Kunststoffelementen zu einer Verbundeinheit verspritzt sind und über eine Kunststoffverbindungstechnik unter Einschluß der elektronischen Bauteile zu einer außerordentlich kurzbauenden und stabilen Einheit verbunden sind. Hierbei ist es vorteilhaft, L-förmige Krampen vorzusehen, die aus den Blechen freigestanzt und positioniergerecht gebogen werden. Dabei ergänzen sich Zahl und Anordnung der Krampen an der Basis- und Abdeckplatte miteinander. Mit den außerordentlich dünn auszubildenden Metallklammern/Federelementen ist es möglich, das Kunststoffprofilteil in PCMCIA-normgerechten Maßen anzufertigen und eine seitliche Erweiterung zu vermeiden, ohne die Führungsfunktion für die einzuschiebende Chipkarte zu beeinträchtigen.

Es sei angemerkt, daß es grundsätzlich auch möglich ist, anstelle der aus dem Material der Basis- und Abdeckplatte herausgestanzten und gebogenen Krampen und Klammem bzw. Federelementen auch separate Halteelemente zu verwenden.

Diese müssen dann mit den entsprechenden Außengehäuseteilen mechanisch verbunden werden.

Vorzugsweise sind die Kunststoffelemente der Abdeckplatte und der Basisplatte mit korrespondierenden Positioniervorsprüngen und -ausnehmungen sowie Verbindungsmitteln, wie Klebeflächen oder Energierichtungsgebem für eine Ultraschallschweißung versehen. Eine Vereinfachung der Montage sowie eine Erhöhung der Festigkeit des Lesegeräts wird hiermit erreicht.

Das Kunststoffprofilteil ist vorteilhafterweise einstückig und weist im wesentlichen einen U-förmigen Querschnitt auf, wobei die offene Seite der U-Form den Einschubschlitz bildet, der den gegenüberliegenden Bereich der U-Form in einer der Chipkarte entsprechenden Breite durchgreift, wobei oberhalb der so gebildeten Öffnung einstückig die plattformartige Erweiterung vorgesehen ist, welche zur niveaugleichen Halterung der Leiterplatte mit Vertiefungen versehen ist, in die vorspringende Positionierlaschen der Leiterplatte bündig eingreifen. Hierdurch ist gewährleistet, daß ein freier Aufnahmekanal für die Chipkarte bereitgestellt wird und ihr Chipfeld sicher das Kontaktfeld der Leiterplatte in eingeschobenem Zustand kontaktiert. Vorteilhafterweise sind die Kunststoffhalter der Basisplatte als Axialanschläge zur Begrenzung des Einschubs der Chipkarte und damit zur exakten Positionierung ausgebildet.

Ebenfalls zur Verkürzung der Baulänge des Chipkartenlesers ist in zweckmäßiger Ausgestaltung der Erfindung vorgeschlagen, den U-förmigen Kunststoffrahmen an seiner geschlossenen Seite nur in Form einer schmalen Leiste auszubilden, die mit der plattformartigen Erweiterung des Kunststoffprofilteils korrespondiert. Ebenso können die freien Schenkelenden des Kunststoffrahmens mit Vorteil korrespondierend zu der Ausbildung der Kunststoffhalter der Basisplatte ausgebildet sein, um einerseits die Positionierung und Verbindung der Teile miteinander zu vereinfachen und andererseits die Halterung der PCMCIA-Steckverbinderleiste im Gehäuse zu verbessern.

Gemäß einem weiteren Vorschlag der Erfindung ist die Basisplatte innenseitig durch eine dünne Verstärkungsplatte aus Metall oder Kunststoff, gegebenenfalls mit Federwirkung, verstärkt, die zum Beispiel eingeklebt oder eingeschweißt sein kann oder aus Kunststoff im Verbund mit den anderen Kunststoffteilen gespritzt sein kann.

Das Verfahren der Erfindung ist durch folgende Verfahrensschritte erfindungsgemäß gekennzeichnet:
Die äußeren Gehäuseschalen werden als separat handhabbare, nicht miteinander verbundene Blechteile in einem ersten Verfahrensschritt gestanzt, wobei an der Basisplatte und der Abdeckplatte Krampen und Klammem freigestanzt und einwärts gebogen werden;
die Basisplatte bzw. die Abdeckplatte werden in einem zweiten Verfahrensschritt separat mit den Kunststoffhaltern und dem Kunststoffprofilteil einerseits bzw. dem Kunststoffrahmen andererseits durch einen Spritzgießvorgang in Form einer Verbundeinheit versehen;
die Leiterplatte mit ihrer Steckverbinderleiste wird sodann von oben auf die Basisplatte unter Bildung des Einschubkanals für die Chipkarte aufgesetzt und in dem Kunststoffprofilteil und den Kunststoffhaltern positioniert;
in einem abschließenden Verfahrensschritt werden die derart vormontierten Gehäuseschalen mit innenliegenden Kunststoffelementen aufeinander angeordnet und durch eine Kunststoffverbindungstechnik, wie Kleben, Ultraschallschweißen oder Heißverpressen miteinander verbunden.

Dabei werden vorzugsweise durch einen einzigen Spritzgießvorgang auf der Basisplatte innenseitig das die Einschubführung für die Chipkarte bildende Kunststoffprofilteil und die beiden Kunststoffhalter für die Steckverbinderleiste hergestellt und wird durch einen weiteren Spritzgießvorgang auf der Abdeckplatte innenseitig der Kunststoffrahmen für die Leiterplatte hergestellt. Durch das Verfahren ist eine vertikale Montage, das heißt ein Teil über dem anderen, ermöglicht, wobei durch die spritzgießtechnische Ausbildung der Profilformen, des Einschubschlitzes und Einschubkanals für die Chipkarte, der Positionierelemente und Mittel für die Kunststoffverbindung eine sehr einfache Herstellung ermöglicht ist, die kein Nacharbeiten oder Ergänzen erfordert, so daß eine vollautomatische Produktion aufgebaut werden kann. Durch die damit erreichbaren außerordentlich knappen Abmessungen ist die Herstellung einer Kontaktiereinheit in PCMCIA-Normabmessungen möglich, die in vollem Umfange in den handelsüblichen PCMCIA-Aufnahmeschlitz eines Computers versenkbar ist. Die Umspritzung der Metallkrampen und Klammem mit den verschiedenen Kunststoffprofilen sichert die Positioniergenauigkeit und Stabilität des erfindungsgemäßen Chipkartenlesers. Dieser wird in seiner bevorzugten Anwendung zur Sicherung eines Computers gegen unberechtigte Benutzung verwendet, wobei die Sicherung mittels der eingeschobenen und kontaktierten Chipkarte von dem Zugangsberechtigten aufhebbar ist.

Weitere Einzelheiten, Merkmale und Vorteile des Gegenstandes der Erfindung ergeben sich aus der nachfolgenden Beschreibung der zugehörigen Zeichnung, in der eine bevorzugte Ausführungsform einer erfindungsgemäßen Kontaktiereinheit schematisch dargestellt ist. In der Zeichnung zeigt:
- Fig. 1: Eine perspektivische Darstellung einer Kontaktiereinheit in einer Gesamtansicht,
- Fig. 2: in Einzeldarstellung die beiden äußeren Gehäuseschalen der Kontaktiereinheit der Fig. 1 in Form einer Basisplatte und einer Abdeckplatte, jeweils in einer perspektivischen Darstellung der Innenseite,
- Fig. 3: die zur Bestückung der Basisplatte einerseits und der Abdeckplatte andererseits vorgesehenen Kunststoffprofilelemente einzeln in perspektivischer Darstellung,
- Fig. 4: die Einzelteile der Kontaktiereinheit der Fig. 1 in Form aufgeklappt und auseinandergezogen dargestellter Gehäuseschalen sowie der inneren Bestückung in perspektivischer Ansicht,
- Fig. 5: die Einzelteile der Kontaktiervorrichtung gemäß Fig. 4 in einem Montage-Zwischenstadium und
- Fig. 6: die vormontierten Einzelteile in montagefertigem Zustand in einer perspektivischen Explosionsdarstellung.

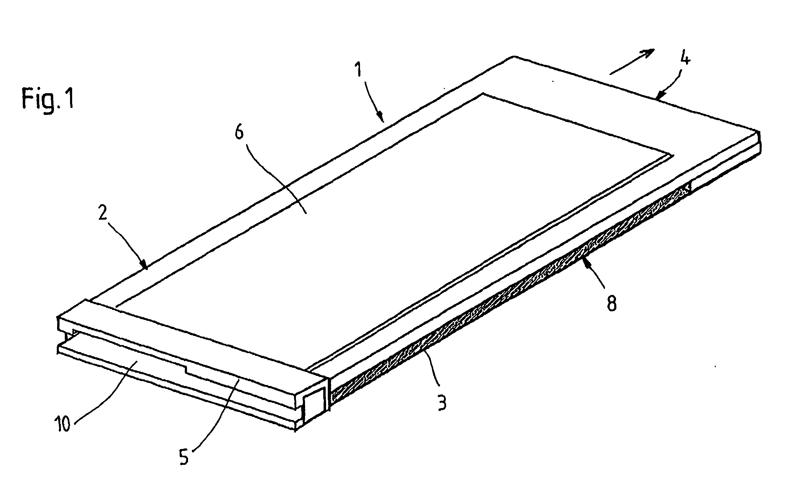

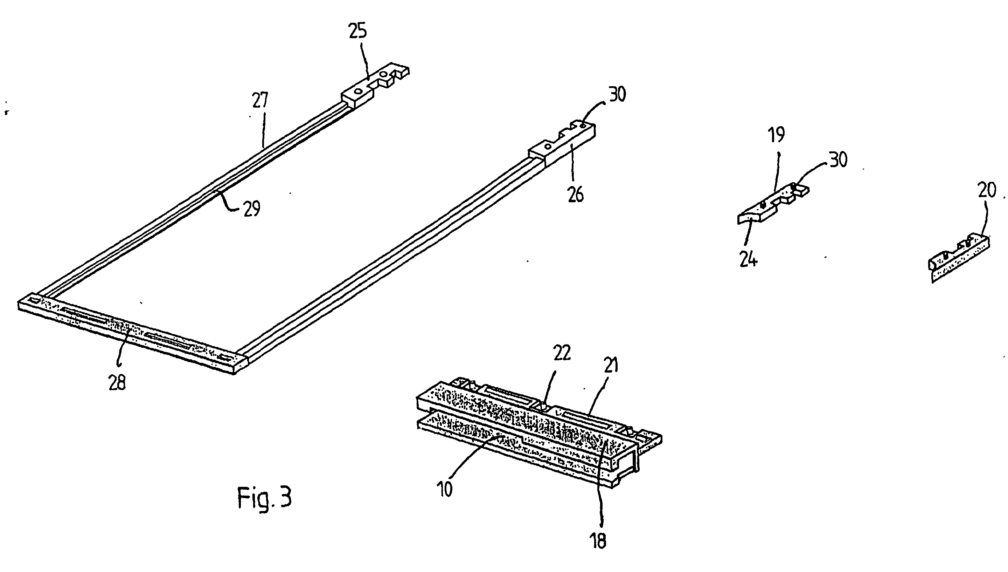

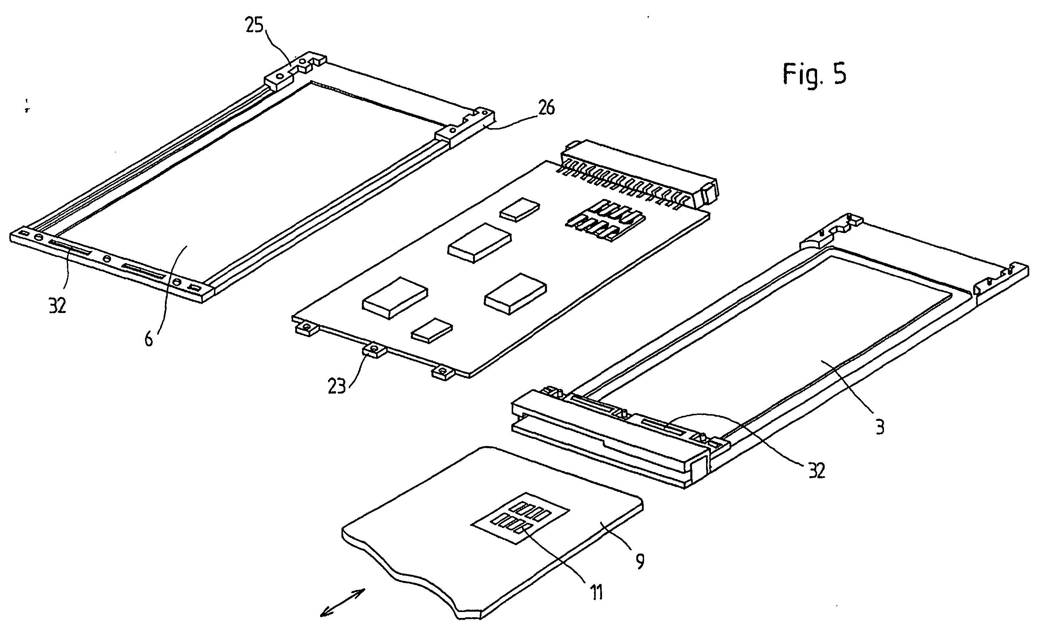

Das in Fig. 1 der Zeichnung dargestellte Ausführungsbeispiel der Erfindung zeigt eine als Chipkartenleser ausgebildete Kontaktiereinheit 1, die vorgesehen ist, über eine normgemäße PCMCIA-Schnittstelle mit einem Notebook kontaktiert zu werden. Die Kontaktiereinheit 1 besteht aus einem zweischaligen Außengehäuse 2 mit einer Basisplatte 3, einem PCMCIA-Anschlußfeld in Form einer Steckverbinderleiste 4 mit 68 Polen an dem in Einschubrichtung in das Notebook gemäß Pfeil vorderen Ende, eine Einschubführung 5 am gegenüberliegenden Ende für die Einführung einer Chipkarte 9 zum Beispiel nach ISO 78 16 und einer parallel mit Abstand zur Basisplatte 3 sich erstreckenden Abdeckplatte 6, welche - wie die Basisplatte 3 - die Steckverbinderleiste 4 mit der Einschubführung 5 starr verbindet. Die genannten Teile der Kontaktiereinheit 1 werden von den in Fig. 3 der Zeichnung dargestellten innenliegenden Kunststoffprofilelementen aus PCB getragen, die darüber hinaus eine PCMCIA-Leiterplatte 7 mit Abstand parallel zur Basisplatte 3 derart halten, daß dazwischen ein Einschubkanal 8 für die ISO 78 16 Chipkarte 9 gebildet wird, die über einen Einschubschlitz 10 der Einschubführung 5 in die Kontaktiereinheit 1 einschiebbar ist. Die Chipkarte 9 läßt sich in Richtung des in Fig. 5 der Zeichnung gezeigten Doppelpfeils in die Kontaktiereinheit 1 einschieben und aus dieser wieder herausziehen, wobei sich über das auf der Oberfläche angeordnete Chipfeld 11 der Chipkarte 9 und ein Kontaktfeld 11' auf der Unterseite der PCMCIA-Leiterplatte 7 eine Kontaktierung vornehmen läßt, die eine Verarbeitung der Chipkarte 9 über die PCMCIA-Karte ermöglicht, wenn die Kontaktiereinheit 1 in den Einschubschlitz des Notebooks eingesetzt ist und mit dessen PCMCIA-Schnittstelle über die Steckverbinderleiste 4 verbunden ist.

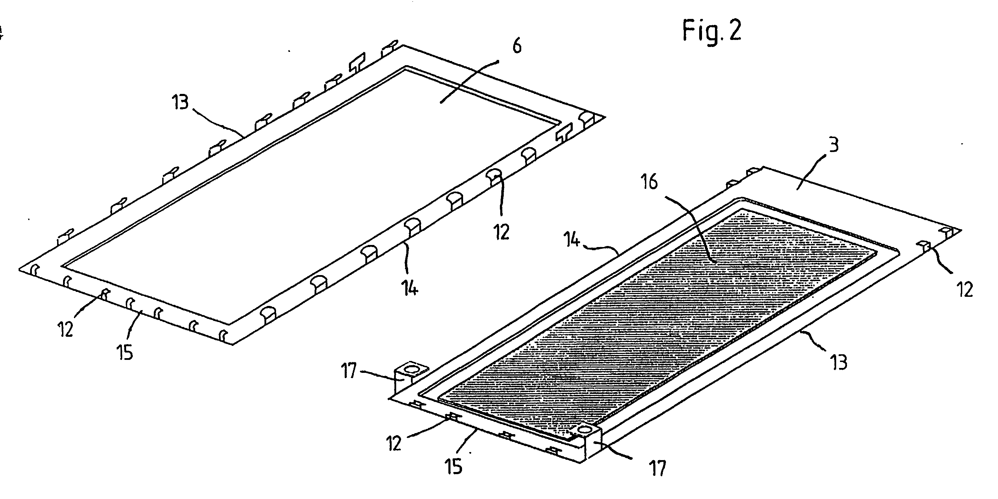

Fig. 2 der Zeichnung zeigt die zwei einzelnen Schalen des Außengehäuses, nämlich die Basisplatte 3 in einer perspektivischen Ansicht auf die Innenseite und die Abdeckplatte 6, quasi um 180° aufgeklappt, ebenfalls in einer perspektivischen Ansicht auf die Innenseite. Basisplatte 3 und Abdeckplatte 6 sind separat handhabbare, nicht miteinander verbundene Blechteile mit nach innen gebogenen Krampen 12 an den Längsseiten 13, 14 und der hinteren Schmalseite 15, während die in Einschubrichtung vordere Schmalseite frei bleibt, um dort später die Steckverbinderleiste 4 anordnen zu können. In dem in Fig. 2 dargestellten Ausführungsbeispiel ist die Basisplatte 3 mit einer eingeschweißten Verstärkungsplatte 16 versehen, die es ermöglicht, ein außerordentlich dünnes Gehäuseblech von etwa 2/10 mm Stärke zu verwenden. Es sei angemerkt, daß anstelle einer Verstärkerplatte 16 aus Metall auch eine solche aus Kunststoff Verwendung finden kann, die in einem einzigen Verfahrensschritt mit anderen, weiter unten beschriebenen Kunststoffteilen durch Spritzgießen hergestellt werden kann.

Die Krampen 12 weisen eine L-Form auf und es ist vorgesehen, diese aus dem Blech der Basisplatte 3 bzw. Abdeckplatte 6 freizustanzen, um 90° aus der Ebene nach innen hochzubiegen und sodann eine weitere Biegung um 90° nach innen vorzunehmen, so daß ein in den späteren Innenraum der Kontaktiereinheit 1 ragender freier Schenkel parallel zur Basisplatte 3 und Abdeckplatte 9 an den Krampen vorhanden ist, der eine besonders günstige Halterung für eine weiter unten beschriebene Kunststoffumspritzung der Krampen 12 darstellt. Zahl und Anordnung der Krampen 12 an der Basis- und Abdeckplatte sind aufeinander in dem Sinne abgestimmt, ein möglichst torsionssteifes Gehäuse zu erzielen, wobei es sich als zweckmäßig erwiesen hat, an der Abdeckplatte 6 eine Vielzahl von Krampen 12 vorzusehen, während an der Basisplatte 3 das die Einschubführung 5 bildende Kunststoffprofilteil 18 mit Krampen 12 an der Querseite 15 und mit je einer Klammer 17 an jeder Längsseite 13, 14 gehalten ist. Die Klammem 17 sind ebenfalls aus dem Blechmaterial der Basisplatte 3 herausgestanzt und hochgebogen sowie L-förmig nach innen gebogen und begrenzen den Einschubschlitz 10 der Einschubführung 5 seitlich, wie Fig. 1 der Zeichnung entnehmbar ist, um Seitenführungen für die einzuschiebende Chipkarte 9 bereitzustellen. In den Klammem 17 sind an den freien Schenkeln Löcher vorgesehen, um den Kunststoffverbund mit dem Kunststoffprofilteil zu verbessern, das die Einschubführung 5 bildet.

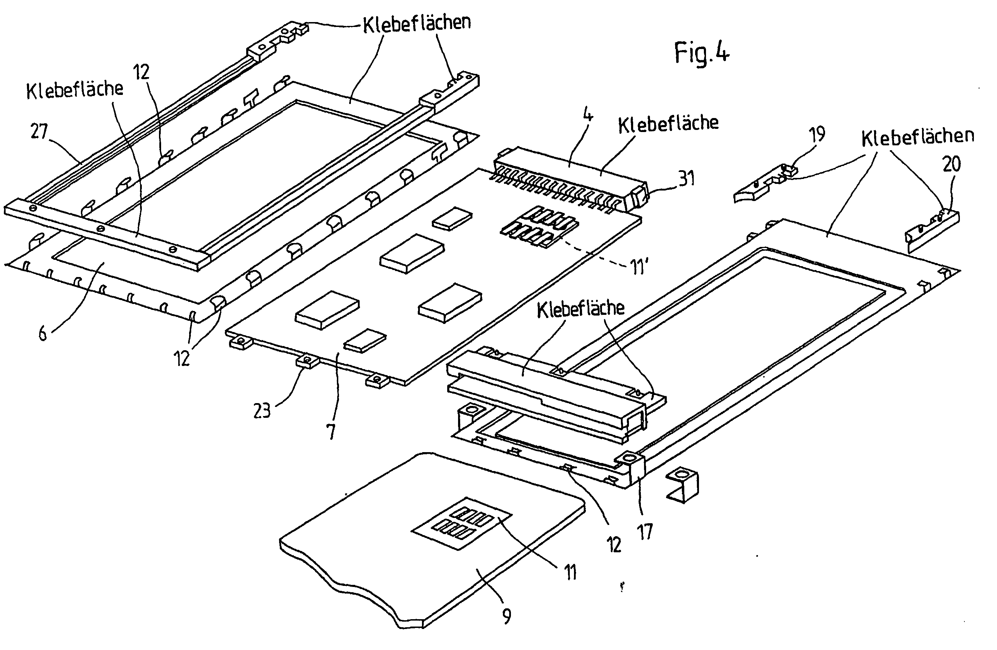

Grundsätzlich ist es auch möglich, anstelle der aus dem Material der Basis- und Abdeckplatte herausgestanzten und gebogenen Krampen und Klammem separate Halteelemente zu verwenden, die dann mit den Gehäuseschalen mechanisch verbunden werden müssen. In Fig. 4 der Zeichnung ist diese Möglichkeit zeichnerisch durch separat dargestellte Klammem verdeutlicht, wobei allerdings in der dargestellten bevorzugten Ausführungsform aus dem Blech selbst herausgestanzte und gebogene Haltelemente Verwendung finden.

Fig. 3 der Zeichnung zeigt in perspektivischer Darstellung die für die innere Bestückung der Kontaktiereinheit 1 verwendeten Kunststoffprofile, die allerdings in der bevorzugten Ausführungsform nicht separat hergestellt und in das Gehäuse eingesetzt werden, sondern im Verbund mit den korrespondierenden Metallteilen des Gehäuses in einem einzigen Verfahrensschritt im Spritzgießverfahren hergestellt werden. Fig. 3 der Zeichnung verdeutlicht in diesem Sinne nur die Form der Kunststoffelemente. Dabei wird korrespondierend zu der Aufgliederung der Fig. 2 das zur Basisplatte 3 gehörende Kunststoffprofilteil 18, das die Einschubführung 5 bildet, gemeinsam mit den zur Basisplatte 3 gehörenden Kunststoffhaltern 19, 20 rechts dargestellt, während der der Abdeckplatte 6 zuzuordende U-förmige Kunststoffrahmen 27 links in der Zeichnung dargestellt ist. Die Zuordnungen ergeben sich genauer aus den Fign. 4 und 5 der Zeichnung und werden weiter unten näher beschrieben.

Das Kunststoffprofilteil 18 ist einstückig durch Spritzgießen hergestellt, weist die Form einer sich über die gesamte Schmalseite 15 der Kontaktiereinheit 1 erstreckenden Leiste von im wesentlichen U-förmigen Querschnitt auf, wobei die offene Seite der U-Form den Einschubschlitz 10 bildet, der den gegenüberliegenden Bereich der U-Form in einer der Chipkarte 9 entsprechenden Breite durchgreift, so daß das den Einschubschlitz 10 bildende leistenförmige Oberteil und das dazu mit Abstand angeordnete leistenförmige Unterteil wegen des durchgreifenden Schlitzes nur durch Stege miteinander verbunden sind und der Einschubschlitz 10 des Kunststoffprofilteils 18 seitlich offen ist. Das Kunststoffprofilteil 18 weist ferner einstückig oberhalb des Einschubschlitzes eine nach innen gerichtete plattformartige Erweiterung 21 auf, die zur niveaugleichen Halterung der Leiterplatte 7 mit Vertiefungen 22 versehen ist, in welche von der Leiterplatte 7 vorspringende Positionierlaschen 23 in zusammengebautem Zustand bündig eingreifen.

Im in Einschubrichtung vorderen Bereich der Basisplatte 3 sind zur Halterung der Steckverbinderleiste 4 die Kunststoffhalter 19, 20 vorgesehen, die gleichzeitig als Axialanschläge zur Begrenzung des Einschubs der Chipkarte 9 mit entsprechend gerundeten Anschlagflächen 24 ausgebildet sind.

Die Kunststoffhalter 19 korrespondieren mit entsprechend geformten Haltern 25, 26 an den freien Enden des zur Abdeckplatte 6 gehörenden U-förmigen Kunststoffrahmens 27, der an seiner geschlossenen Seite nur als schmale Leiste 28 ausgebildet ist, die mit der plattformartigen Erweiterung 21 des Kunststoffprofilteils 18 in zusammengebautem Zustand korrespondiert. Die Längsschenkel des Kunststoffrahmens 27 weisen eine nach innen offene Führung in Form einer Abstufung 29 für die Erfassung und Halterung der Leiterplatte 7 auf, die durch den Kunststoffrahmen 27 in zusammengebautem Zustand fixiert wird, wobei die Halter 25, 26 gemeinsam mit den Kunststoffhaltern 19, 20 der Fixierung der mit der Leiterplatte 7 verbundenen Steckverbinderleiste 4 dienen.

Die in Fig. 3 der Zeichnung dargestellten Kunststoffelemente sind ferner mit verschiedenen der Positionierung dienenden Positioniervorsprüngen und -ausnehmungen 30 versehen.

Die bereits erwähnte Zuordnung der Kunststoffelemente zur Basisplatte 3 bzw. Abdeckplatte 6 sowie die Anordnung der Leiterplatte 7 in diesen Gehäuseschalen ist den Explosionsdarstellungen der Fign. 4 und 5 entnehmbar, die insoweit unterschiedliche Ausführungsformen der Kontaktiereinheit 1 betreffen, als gemäß Fig. 4 eine Verklebung der Kunststoffteile miteinander, während gemäß Fig. 5 eine Ultraschallverschweißung der Kunststoffteile miteinander vorgesehen ist. Es ist ersichtlich, daß die Basisplatte 3 am Einsteckende randseitig mit den Kunststoffhaltern 19, 20 versehen wird, die durch jeweils zwei Krampen 12 gehalten werden. An der gegenüberliegenden Schmalseite wird das Kunststoffprofilteil 18 innenseitig auf der Basisplatte 3 angeordnet und durch die Klammem 17 beidseitig gehalten, die gleichzeitig den Einschubschlitz 10 seitlich begrenzen und damit Seitenführungen für die einzuschiebende Chipkarte 9 darstellen. Zur querseitigen Halterung sind die an der Schmalseite 15 ausgebildeten Krampen 12 vorgesehen.

Die daneben gezeichnete Leiterplatte 7 wird derart auf der Basisplatte 3 angeordnet, daß frontseitig die an der Steckverbinderleiste 4 seitlich erkennbaren Nocken 31 in die entsprechenden Ausnehmungen der Kunststoffhalter 19, 20 eingreifen und gegenüberliegend die Positionierlaschen 23 der Leiterplatte 7 bündig in die Vertiefungen 22 der plattformartigen Erweiterung 21 des Kunststoffprofilteils 18 eingesetzt werden. Hiermit ist auch der Einschubkanal 8 zwischen der Basisplatte und der Leiterplatte 7 gebildet, der zur Einführung der Chipkarte 9 frei bleibt und die Kontaktierung des Chipfeldes 11 über das Kontaktfeld 11' mit der PCMCIA-Karte ermöglicht.

Die Abdeckplatte in den Fign. 4 und 5 der Zeichnung ist nicht in der Montageposition dargestellt, sondern vielmehr um 180° aufgeklappt, um den Blick ins Innere zu ermöglichen. Es ist erkennbar, daß der Abdeckplatte 7 der U-förmige Kunststoffrahmen 27 zugeordnet ist, der durch die entsprechenden Krampen 12 auf der Abdeckplatte 6 gehalten ist und zur Montage auf die in der beschriebenen Weise vorbereitete Basisplatte 3 mit Leiterplatte 7 aufgesetzt wird. Dabei kommen die in der Zeichnung als "Klebeflächen" bezeichneten Flächen der Kunststoffelemente aufeinander zu liegen und können zur Herstellung eines festen Verbundes miteinander verklebt werden.

Die in der Fig. 5 der Zeichnung dargestellte Version ist zur Durchführung eines Ultraschallverschweißens auf den Kunststoffflächen mit Energierichtungsgebem 32 versehen. Darüber hinaus zeigt Fig. 5 im Unterschied zu Fig. 4 der Zeichnung bereits die korrekte Anordnung der Kunststoffelemente auf der Basisplatte 3 bzw. Abdeckplatte 6, wobei erkennbar ist, daß die Krampen 12 nicht mehr zu sehen sind. Dies beruht auf dem bevorzugt bei der Herstellung der erfindungsgemäßen Kontaktiereinheit benutzten Herstellungsverfahren, bei dem folgende Verfahrensschritte durchgeführt werden:
1. Die äußeren Gehäuseschalen in Form der Basisplatte 3 und der Abdeckplatte 6 werden als separat handhabbare, nicht miteinander verbundene Blechteile gestanzt, wobei gleichzeitig die Krampen 12 und Klammem 17 freigestanzt und einwärts gebogen werden;
2. Die Basisplatte 3 bzw. die Abdeckplatte 6 werden in einem zweiten Verfahrensschritt separat mit den Kunststoffhaltern 19, 20 und dem Kunststoffprofilteil 18 einerseits bzw. dem Kunststoffrahmen 27 andererseits durch einen Spritzgießvorgang in Form einer Verbundeinheit versehen;
3. Die Leiterplatte 7 mit ihrer Steckverbinderleiste 4 wird sodann von oben auf die Basisplatte 3 unter Bildung des Einschubkanals 8 aufgesetzt und in dem Kunststoffprofilteil 18 und den Kunststoffhaltern 19, 20 positioniert;
4. In einem abschließenden Verfahrensschritt werden die derart vormontierten Gehäuseschalen mit innenliegenden Kunststoffelementen aufeinander angeordnet und durch eine Kunststoffverbindungstechnik, beispielsweise Kleben oder Ultraschallschweißen miteinander verbunden.

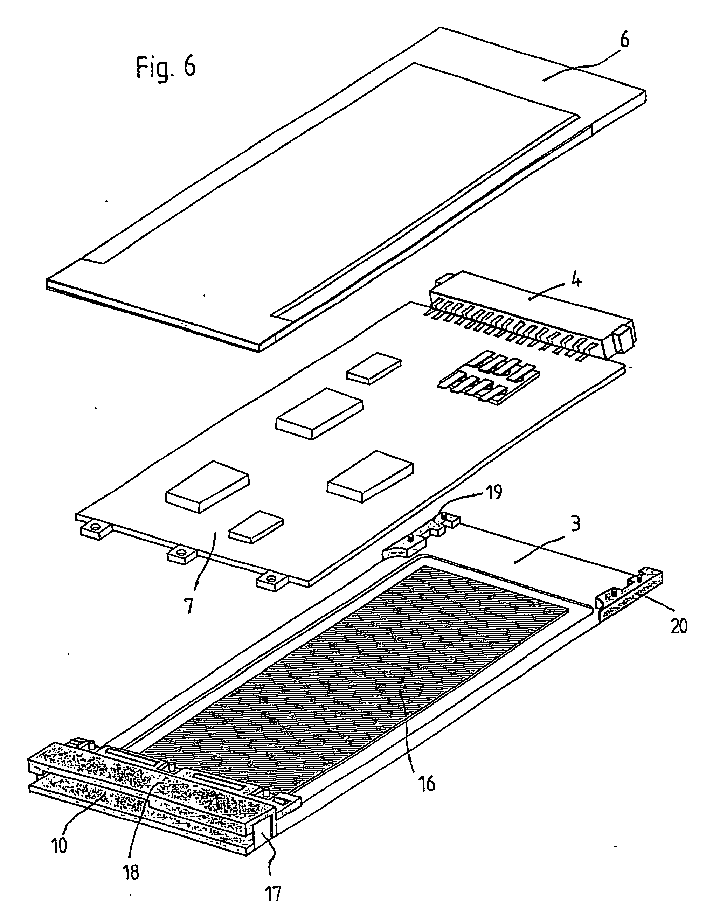

Fig. 6 der Zeichnung verdeutlicht die vertikale Montage der drei vorgefertigten Teile durch die Explosionsdarstellung, aus der erkennbar ist, daß die Basisplatte 3 durch einen einzigen Spritzgießvorgang innenseitig mit dem die Einschubführung 5 für die Chipkarte bildenden Kunststoffprofilteil 18 und den beiden Kunststoffhaltern 19, 20 für die Steckverbinderleiste 4 sowie einer Kunststoff-Verstärkungsplatte 16 versehen ist. Durch das Umspritzen mit Kunststoff sind die als Halteelemente dienenden Krampen 12 in den Verbund integriert und nicht mehr zu sehen, während die Klammem 17 seitlich und innerhalb des Einschubschlitzes 10 von Kunststoff freigehalten sind, um einerseits eine gute Seitenführung für die Chipkarte sicherzustellen und andererseits die Breite der Kontaktiereinheit so eng wie möglich innerhalb der PCMCIA-Norm halten zu können.

## Patentansprüche

1. Kontaktiereinheit (1) nach PCMCIA-Norm, mit einer kartenförmigen Leiterplatte (7) mit elektronischen Baugruppen, die zusätzlich zu der an einer der schmalen Kartenseiten angeordneten Steckverbinderleiste (4) der Leiterplatte (7) mit einem Kontaktfeld (11') an einer Oberfläche der Leiterplatte (7) für die Kontaktierung einer Chipkarte (9) ausgerüstet ist, die parallel zur Leiterplatte (7) durch einen Einschubschlitz (10) in einen schlitzartigen Einschubkanal (8) einschiebbar ist, welcher zwischen einer Basisplatte (3) und der Leiterplatte (7) ausgebildet ist und eine Einschubführung (5) an der der Steckverbinderleiste (4) gegenüberliegenden schmalen Seite (15) aufweist, wobei die Leiterplatte (7) von einem Kunststoffrahmen (27) gehalten ist, der an einer Abdeckplatte (6) angeordnet ist,
**gekennzeichnet durch**
folgende Merkmale:
1.1 die Basisplatte (3) und die Abdeckplatte (6) sind separate Blechteile mit nach innen gebogenen Krampen (12) an den Längsseiten (13, 14) und/oder Schmalseiten (15);
1.2 die Basisplatte (3) ist an der Steckverbinderleiste (4) zu deren Erfassung randseitig mit je einem Kunststoffhalter (19, 20) und an der Chipkarten-Einschubseite mit einem über die gesamte Querseite sich erstreckenden leistenförmigen Kunststoffprofilteil (18) versehen, das die Einschubführung (5) bildet und eine durchgehende Schlitzöffnung (10) für die Chipkarte (9) zu dem Einschubkanal (8) aufweist, wobei an dem Kunststoffprofilteil (18) eine sich nach innen erstreckende plattformartige Erweiterung (21) oberhalb der Schlitzöffnung (10) zur Halterung der Leiterplatte (7) angeordnet ist;
1.3 an der Abdeckplatte (6) sind zur Halterung des Kunststoffrahmens (27) eine Vielzahl von Krampen (12) vorgesehen, während an der Basisplatte (3) das die Einschubführung (5) bildende Kunststoffprofilteil (18) mit Krampen (12) an der Querseite (15) und mit je einer Klammer (17) oder einem Federelement an jeder Längsseite (13, 14) gehalten ist, die den Einschubschlitz (10) seitlich begrenzen und damit Seitenführungen für die einzuschiebende Chipkarte (9) bilden;
1.4 die Kunststoffhalter (19, 20) und das Kunststoffprofilteil (18) sind mit den zugeordneten Krampen (12) der Basisplatte (3) zu einer Verbundeinheit verspritzt;
1.5 die Abdeckplatte (6) ist innenseitig mit dem Kunststoffrahmen (27) versehen, der mit den zugeordneten Krampen (12) der Abdeckplatte (6) zu einer Verbundeinheit verspritzt ist;
1.6 die Abdeckplatte (6) und die Basisplatte (3) sind miteinander über die Kunststoffelemente (19,20;21,23;27) **durch** eine Kunststoffverbindung, wie Kleben, Ultraschallschweißen oder Heißverpressen verbunden.

2. Kontaktiereinheit nach Anspruch 1, **dadurch gekennzeichnet, daß** die Kunststoffelemente (19,20;21,23;27) der Abdeckplatte (6) und der Basisplatte (3) mit korrespondierenden Positioniervorsprüngen und -ausnehmungen (30) sowie Verbindungsmitteln, wie Klebeflächen und Energierichtungsgebem (32) für eine Ultraschallschweißung versehen sind.

3. Kontaktiereinheit nach Anspruch 1 oder 2, **dadurch gekennzeichnet, daß** L-förmige Krampen (12) vorgesehen sind, die aus den Blechteilen freigestanzt und positioniergerecht gebogen sind.

4. Kontaktiereinheit nach einem der Ansprüche 1 bis 3, **dadurch gekennzeichnet, daß** das Kunststoffprofilteil (18) einstückig ist und einen U-förmigen Querschnitt aufweist, wobei die offene Seite der U-Form den Einschubschlitz (10) bildet, der den gegenüberliegenden Bereich der U-Form in einer der Chipkarte (9) entsprechenden Breite durchgreift, wobei oberhalb der so gebildeten Öffnung einstückig die plattformartige Erweiterung (21) vorgesehen ist, welche zur niveaugleichen Halterung der Leiterplatte (7) mit Vertiefungen (22) versehen ist, in die vorspringende Positionierlaschen (23) der Leiterplatte (7) bündig eingreifen.

5. Kontaktiereinheit nach einem der Ansprüche 1 bis 4, **dadurch gekennzeichnet, daß** die Kunststoffhalter (19, 20) der Basisplatte (3) als Axialanschläge (24) zur Begrenzung des Einschubs der Chipkarte (9) ausgebildet sind.

6. Kontaktiereinheit nach einem der Ansprüche 1 bis 5, **dadurch gekennzeichnet, daß** der U-förmige Kunststoffrahmen (27) an seiner geschlossenen Seite in Form einer schmalen Leiste ausgebildet ist, die mit der plattformartigen Erweiterung (21) des Kunststoffprofilteils (18) korrespondiert.

7. Kontaktiereinheit nach Anspruch 6, **dadurch gekennzeichnet, daß** die freien Schenkelenden des Kunststoffrahmens (27) korrespondierend zur der Ausbildung der Kunststoffhalter (19, 20) der Basisplatte (3) ausgebildet sind.

8. Kontaktiereinheit nach einem der Ansprüche 1 bis 7, **dadurch gekennzeichnet, daß** die Basisplatte (3) innenseitig durch eine Verstärkungsplatte (16) aus Metall oder Kunststoff, gegebenenfalls mit Federwirkung, verstärkt ist, die eingeklebt oder eingeschweißt oder aus Kunststoff im Verbund eingespritzt ist.

9. Verfahren zur Herstellung einer Kontaktiereinheit gemäß einem der Ansprüche 1 bis 8, **gekennzeichnet durch** folgende Verfahrensschritte:
9.1 Die äußeren Gehäuseschalen werden als separat handhabbare, nicht miteinander verbundene Blechteile in einem ersten Verfahrensschritt gestanzt, wobei an der Basisplatte (3) und an der Abdeckplatte (6) Krampen (12) und Klammem (17) freigestanzt und einwärts gebogen werden;
9.2 die Basisplatte (3) bzw. die Abdeckplatte (6) werden in einem zweiten Verfahrensschritt separat mit den Kunststoffhaltern (19, 20) und dem Kunststoffprofilteil (18) einerseits bzw. dem Kunststoffrahmen (27) andererseits **durch** einen Spritzgießvorgang in Form einer Verbundeinheit versehen;
9.3 die Leiterplatte (7) mit ihrer Steckverbinderleiste (4) wird sodann von oben auf die Basisplatte (3) aufgesetzt und in dem Kunststoffprofilteil (18) und den Kunststoffhaltern (19, 20) positioniert;
9.4 in einem abschließenden Verfahrensschritt werden die derart vormontierten Gehäuseschalen mit innenliegenden Kunststoffelementen (19, 20; 21, 23; 27) aufeinander angeordnet und **durch** eine Kunststoffverbindungstechnik wie Kleben, Ultraschallschweißen oder Heißverpressen miteinander verbunden.

10. Verfahren nach Anspruch 9, **dadurch gekennzeichnet, daß** durch einen einzigen Spritzgießvorgang auf der Basisplatte (3) innenseitig das die Einschubführung (5) für die Chipkarte (9) bildende Kunststoffprofilteil (18) und die beiden Kunststoffhalter (19, 20) für die Steckverbinderleiste (4) hergestellt und das durch einen weiteren Spritzgießvorgang auf der Abdeckplatte (6) innenseitig der Kunststoffrahmen (27) für die Leiterplatte (7) hergestellt werden.

11. Anwendung einer Kontaktiereinheit gemäß einem der Ansprüche 1 bis 8 zur Sicherung eines Notebooks gegen unberechtigte Benutzung, wobei die Sicherung mittels der eingeschobenen und kontaktierten Chipkarte (9) von dem Zugangsberechtigten aufhebbar ist.

## Claims

1. Contacting unit (1) according to the PCMCIA standard, with a card-shaped printed circuit board (7) with electronic subassemblies, which, in addition to the edge connector (4), disposed at one of the narrow card sides, of the printed circuit board (7) is equipped with a contact bank (11') on one surface of the printed circuit board (7) for contacting a chip card (9), which can be inserted parallel to the printed circuit board (7) through an insertion slot (10) into a slot-like insertion duct (8), which is formed between a base plate (3) and the printed circuit board (7) and comprises an insertion guide (5) at the narrow side (15) lying opposite the edge connector (4), wherein the printed circuit board (7) is held by a plastics frame (27), which is disposed on a cover plate (6),
**characterised by** the following features:
1.1 the base plate (3) and the cover plate (6) are separate sheet metal parts with inward bent clamps (12) at the longitudinal sides (13, 14) and/or narrow sides (15);
1.2 the base plate (3) is provided with a respective plastics holder (19, 20) on the edge connector (4) for gripping the latter at the edges, and with a strip-shaped plastics profile part (18), which extends over the entire transverse side, at the chip card insertion side, which part forms the insertion guide (5) and comprises a continuous slotted opening (10) for the chip card (9) to the insertion duct (8), wherein an inward extending, platform-like enlargement (21) is disposed on the plastics profile part (18) above the slotted opening (10) to hold the printed circuit board (7);
1.3 a plurality of clamps (12) are provided on the cover plate (6) to hold the plastics frame (27), while the plastics profile part (18), which forms the insertion guide (5), is held on the base plate (3) with clamps (12) at the transverse side (15) and with a respective clip (17) or a spring element at each longitudinal side (13, 14), which define the insertion slot (10) at the sides and thus form lateral guides for the chip card (9) which is to be inserted;
1.4 the plastics holders (19, 20) and the plastics profile part (18) are injection moulded with the associated clamps (12) of the base plate (3) to form a composite unit;
1.5 the cover plate (6) is provided on the inside with the plastics frame (27), which is injection moulded with the associated clamps (12) of the cover plate (6) to form a composite unit;
1.6 the cover plate (6) and the base plate (3) are joined together via the plastics elements (19, 20; 21, 23; 27) by a plastics joining technique such as adhesive bonding, ultrasonic welding or hot pressing.

2. Contacting unit according to Claim 1, **characterised in that** the plastics elements (19, 20; 21, 23; 27) of the cover plate (6) and of the base plate (3) are provided with corresponding positioning projections and recesses (30) as well as joining means such as adherends and power flow direction detectors (32) for ultrasonic welding.

3. Contacting unit according to Claim 1 or 2, **characterised in that** L-shaped clamps (12) are provided, these being punched out of the sheet-metal parts and bent so as to be correct for positioning.

4. Contacting unit according to any one of Claims 1 to 3, **characterised in that** the plastics profile part (18) is in one piece and has a U-shaped cross section, wherein the open side of the U-shape forms the insertion slot (10), which reaches through the opposite region of the U-shape with a width corresponding to the chip card (9), wherein the platform-like enlargement (21) is provided in one piece above the opening which is thus formed and is provided with indentations (22) for holding the printed circuit board (7) at the same level, in which indentations the projecting positioning tongues (23) of the printed circuit board (7) engage in a flush manner.

5. Contacting unit according to any one of Claims 1 to 4, **characterised in that** the plastics holders (19, 20) of the base plate (3) are formed as axial stops (24) for limiting the insertion of the chip card (9).

6. Contacting unit according to any one of Claims 1 to 5, **characterised in that**, at its closed side, the U-shaped plastics frame (27) is in the form of a narrow strip which corresponds to the platform-like enlargement (21) of the plastics profile part (18).

7. Contacting unit according to Claim 6, **characterised in that** the free arm ends of the plastics frame (27) are formed in a manner corresponding to that of the plastics holders (19, 20) of the base plate (3).

8. Contacting unit according to any one of Claims 1 to 7, **characterised in that** the base plate (3) is reinforced on the inside by a reinforcing plate (16) of metal or a plastics material, optionally with a spring action, which is stuck in or welded in or injection moulded from a plastics material in a composite structure.

9. Method for producing a contacting unit according to any one of Claims 1 to 8, **characterised by** the following method steps:
9.1 The outer housing shells are punched in a first method step as sheet metal parts which can be handled separately and are not joined together, wherein clamps (12) and clips (17) are punched out and bent inwards at the base plate (3) and at the cover plate (6);
9.2 the base plate (3) and the cover plate (6), respectively, are provided separately in a second method step with the plastics holders (19, 20) and the plastics profile part (18) on the one hand and the plastics frame (27) on the other in the form of a composite unit by an injection moulding operation;
9.3 the printed circuit board (7) with its edge connector (4) is then placed from above on the base plate (3) and positioned in the plastics profile part (18) and the plastics holders (19, 20);
9.4 in a final method step the housing shells which are thus pre-assembled are disposed on top of one another with plastics elements (19, 20; 21, 23; 27) lying on the inside and joined together by a plastics joining technique such as adhesive bonding, ultrasonic welding or hot pressing.

10. Method according to Claim 9, **characterised in that** the plastics profile part (18) forming the insertion guide (5) for the chip card (9) and the two plastics holders (19, 20) for the edge connector (4) are produced by a single injection moulding operation on the inside of the base plate (3), and that the plastics frame (27) for the printed circuit board (7) is produced by a further injection moulding operation on the inside of the cover plate (5).

11. Application of a contacting unit according to any one of Claims 1 to 8 for safeguarding a notebook against unauthorised use, wherein the safeguard can be cancelled by the person with authorised access by means of the inserted and contacted chip card (9).

## Revendications

1. Unité (1) de mise en contact selon le standard PCMCIA, comportant une carte à circuits imprimés (7) avec des composants électroniques, qui est équipée, en supplément à une baguette de connexion par enfichage (4) agencée sur l'un des petits côtés de la carte imprimée (7), d'un champ de contacts (11') sur une surface de la carte imprimée (7) pour la mise en contact d'une carte à puce (9) qui peut être introduite parallèlement à la carte imprimée (7) à travers une fente d'introduction (10) dans un canal d'introduction (8) en forme de fente qui est ménagé entre-une plaque de base (3) et la carte imprimée (7) et qui comprend un guidage d'introduction (5) sur le petit côté (15) opposé à la baguette de connexion par enfichage (4), la carte imprimée (7) étant maintenue par un cadre (27) en matière plastique qui est agencé sur une plaque de recouvrement (6), **caractérisée en ce que**
1.1 la plaque de base (3) et la plaque de recouvrement (6) sont des pièces en tôle séparées comprenant des crochets (12) repliés vers l'intérieur sur les grands côtés (13, 14) et/ou sur les petits côtés (15) ;
1.2 la plaque de base (3) est pourvue, sur la baguette de connexion par enfichage (4) pour la saisir, d'un élément de maintien respectif (19, 20) en matière plastique du côté bordure et d'un élément profilé (18) en matière plastique en forme de baguette s'étendant sur tout le côté transversal du côté d'introduction de la carte à puce, ledit élément formant le guidage d'introduction (5) et présentant une ouverture traversante (10) en forme de fente pour la carte à puce (9) vers le canal d'introduction (8), un élargissement (21) en forme de plate-forme s'étendant vers l'intérieur étant prévu sur l'élément profilé (18) en matière plastique au-dessus de l'ouverture en fente (10) pour le maintien de la carte imprimée (7) ;
1.3 sur la plaque de recouvrement (6) sont prévus une multitude de crochets (12) pour le maintien du cadre (27) en matière plastique, tandis que sur la plaque de base (3) l'élément profilé (18) en matière plastique formant le guidage d'introduction (5) est retenu par des crochets (12) sur le côté transversal (15) et par une pince respective (17) ou par un élément élastique sur chaque grand côté (13, 14), qui limitent latéralement la fente d'introduction (10) et qui forment ainsi des guidages latéraux pour la carte à puce à introduire (9) ;
1.4 les éléments de maintien (19, 20) en matière plastique et l'élément profilé (18) en matière plastique sont assemblés par injection avec les crochets associés (12) de la plaque de base (3) pour former une unité composite ;
1.5 la plaque de recouvrement (6) est munie, du côté intérieur, du cadre (27) en matière plastique qui est assemblé par injection avec les crochets associés (12) de la plaque de recouvrement (6), pour former une unité composite ;
1.6 la plaque de recouvrement (6) et la plaque de base (3) sont reliées l'une à l'autre via les éléments en matière plastique (19, 20 ; 21, 23 ; 27) par une liaison en matière plastique, telle qu'un collage, une soudure par ultrasons ou une compression à chaud.

2. Unité de mise en contact selon la revendication 1, **caractérisée en ce que** les éléments en matière plastique (19, 20 ; 21, 23 ; 27) de la plaque de recouvrement (6) et de la plaque de base (3) sont pourvus de saillies et d'évidements correspondants (30) ainsi que de moyens de liaison, tels que des surfaces à coller et des éléments d'orientation d'énergie (32) pour un soudage par ultrasons.

3. Unité de mise en contact selon l'une ou l'autre des revendications 1 et 2, **caractérisée en ce qu'**il est prévu des crochets (12) en forme de L qui sont poinçonnés à partir des pièces en tôle et qui sont repliés de façon appropriée au positionnement.

4. Unité de mise en contact selon l'une quelconque des revendications 1 à 3, **caractérisée en ce que** l'élément profilé (18) en matière plastique est d'une seule pièce et présente une section en forme de U, le côté ouvert de la forme en U formant la fente d'introduction (10) qui traverse la zone opposée de la forme en U sur une largeur qui correspond à la carte à puce (9), où l'élargissement (21) en forme de plate-forme est prévu en une seule pièce au-dessus de l'ouverture ainsi formée et est pourvu de renfoncements (22) pour le maintien à niveau égal de la carte imprimée (7), dans lesquels s'engagent en affleurement des pattes de positionnement (23) en saillie de la carte imprimée (7).

5. Unité de mise en contact selon l'une quelconque des revendications 1 à 4, **caractérisée en ce que** les éléments de maintien (19, 20) en matière plastique de la plaque de base (3) sont réalisés sous forme de butées axiales (24) pour limiter l'introduction de la carte à puce (9).

6. Unité de mise en contact selon l'une quelconque des revendications 1 à 5, **caractérisée en ce que** le cadre (27) en matière plastique et en forme de U est réalisé, sur son côté fermé, sous forme d'une baguette étroite qui correspond avec l'élargissement (21) en forme de plate-forme de l'élément profilé (18) en matière plastique.

7. Unité de mise en contact selon la revendication 6, **caractérisée en ce que** les extrémités libres des bras du cadre (27) en matière plastique sont réalisées en correspondance de la réalisation des éléments de maintien (19, 20) en matière plastique de la plaque de base (3).

8. Unité de mise en contact selon l'une quelconque des revendications 1 à 7, **caractérisée en ce que** la plaque de base (3) est renforcée du côté intérieur par une plaque de renforcement (16) en métal ou en matière plastique, le cas échéant à effet ressort, qui est collée ou soudée ou injectée en matière plastique pour former un composite.

9. Procédé pour réaliser une unité de mise en contact selon l'une quelconque des revendications 1 à 8, **caractérisé par** les étapes suivantes :
9.1 dans une première étape, on poinçonne les coques de boîtier extérieures en tant que pièces en tôle à manipuler séparément non reliées l'une à l'autre, des crochets (12) et des pinces (17) étant poinçonné(e)s et replié(e)s vers l'intérieur sur la plaque de base (3) et sur la plaque de recouvrement (6) ;
9.2 dans une seconde étape, on pourvoit respectivement la plaque de base (3) et la plaque de recouvrement (6) séparément d'éléments de maintien (19, 20) en matière plastique et d'un élément profilé (18) en matière plastique d'une part et du cadre (27) en matière plastique d'autre part par une opération de coulée par injection sous forme d'une unité composite ;
9.3 ensuite, on pose depuis le haut la carte imprimée (7) avec sa baguette de connexion par enfichage (4) sur la plaque de base (3) et on la positionne dans l'élément profilé (18) en matière plastique et dans les éléments de maintien (19, 20) en matière plastique ;
9.4 dans une étape finale, on superpose les coques de boîtier ainsi prémontées avec les éléments en matière plastique (19, 20 ; 21, 23 ; 27) situés à l'intérieur et on les relie par une technique de liaison pour matière plastique, telle qu'un collage, un soudage par ultrasons ou une compression à chaud.

10. Procédé selon la revendication 9, **caractérisé en ce que** l'on réalise l'élément profilé (18) en matière plastique formant le guidage d'introduction (5) pour la carte à puce (9) et les deux éléments de maintien (19, 20) en matière plastique pour la baguette de connexion par enfichage (4) par une seule opération de coulée par injection sur la plaque de base (3) du côté intérieur, et **en ce que** l'on réalise le cadre (27) en matière plastique pour la carte imprimée (7) par une autre opération de coulée par injection sur la plaque de recouvrement (6) du côté intérieur.

11. Application d'une unité de mise en contact selon l'une quelconque des revendications 1 à 8 pour protéger un ordinateur portable à l'encontre d'une utilisation non autorisée, la protection pouvant être annulée par une personne autorisée au moyen de la carte à puce (9) introduite et mise en contact.
